# EUROPÄISCHE PATENTSCHRIFT

(11) **EP 0 509 290 B1**
(45) Veröffentlichungstag und Bekanntmachung des Hinweises auf die Patenterteilung: **28.08.1996**
(21) Anmeldenummer: 92105248.6
(22) Anmeldetag: 27.03.1992
(51) Int. Cl.: G01F 1/60

(54) **Magnetisch-induktives Durchflussmessverfahren**
Method for electromagnetic measurement of flow rate
Procédé de mesure électromagnétique de débit

(30) Priorität: 17.04.1991 DE 4112519
(43) Veröffentlichungstag der Anmeldung: 21.10.1992
(73) Patentinhaber: BOPP & REUTHER MESSTECHNIK GmbH, D-68261 Mannheim (DE)
(72) Erfinder: Haug, Peter, W-7060 Schorndorf-Haubersbronn (DE); Pilz, Jochen, W-6840 Hüttenfeld (DE)
(74) Vertreter: Lichti, Heiner, Dipl.-Ing.

(56) Entgegenhaltungen:
- GB-A- 1 445 188
- PATENT ABSTRACTS OF JAPAN vol. 7, no. 234 (P-230)(1379) 18. Oktober 1983 & JP-A-58 122 428 ( HOKUSHIN DENKI ) 21 Juli 1983
- PATENT ABSTRACTS OF JAPAN vol. 4, no. 58 (P-9)(540) 30. April 1980 & JP-A-55 027 957 ( HITACHI ) 28 Februar 1980
- PATENT ABSTRACTS OF JAPAN vol. 8, no. 211 (P-303)(1648) 26. September 1984 & JP-A-59 094 014 ( YOKOGAWA HOKUSHIN ) 31 Mai 1984

## Beschreibung

Die Erfindung betrifft ein magnetisch-induktives Durchflußmeßverfahren für Flüssigkeiten unter Verwendung eines magnetischen Wechselfeldes, wobei eine magnetfeldabhängige Referenzspannung U_{R} und eine vom Magnetfeld in der Flüssigkeit induzierte Meßspannung U_{M} zu einem durchflußabhängigen Nutzsignal verarbeitet werden, indem die Amplitude der mit Feldfrequenz zeitlich variierenden Meßspannung U_{M} durch die Amplitude der mit Feldfrequenz zeitlich variierenden Referenzspannung U_{R} nach einer Phasenkorrektur dividiert und damit das Nutzsignal U_{N} als Quotient gebildet wird.

Magnetisch-induktive Durchflußmesser nutzen das Induktionsprinzip, wonach durch Anlegen eines Magnetfeldes quer zu sich bewegenden Ladungen und senkrecht zu beiden eine Spannung induziert wird. Diese Meßspannung ist proportional zur Geschwindigkeit der Ladungen. So kann mit Hilfe dieser Spannung der Volumen- bzw. Massenstrom einer Flüssigkeit, die freie Ladungsträger beispielsweise durch Dissoziation aufweist, in einem Meßrohr bestimmt werden. Hierbei werden bevorzugt bei schnellen Durchflußänderungen Magnetwechselfelder eingesetzt, die mit Netzfrequenz arbeiten.

Die Auswertung erfolgt bisher dadurch, daß zunächst Meß- und Referenzspannung verstärkt, gefiltert, gleichgerichtet und geglättet werden. Um den Einfluß der Netzspannung zu eliminieren, wird das Verhältnis U_{M}/U_{R} der beiden aufbereiteten Signale gebildet, welches dann proportional der mittleren Geschwindigkeit der Flüssigkeit im Meßrohr ist.

Die Glättung der Spannungen wird üblicherweise durch Tiefpässe ausgeführt. Diese weisen eine Verzögerungszeit auf, so daß Messungen bei schnellen Durchflußänderungen zu Ungenauigkeiten führen. Dies ist insbesondere bei Dosiervorgängen und pulsierenden Strömungen relevant.

Die Verzögerungszeit könnte durch eine Erhöhung der Frequenz des Magnetfeldes verringert werden, was jedoch mit einem schaltungstechnischen Mehraufwand und anderen Störeffekten verbunden wäre.

Aus dem Dokument "Patent Abstracts of Japan, Vol. 4, No. 58 (P-9) (540) JP-A-55 027 957", von dem im Oberbegriff des Patentanspruchs 1 ausgegangen wird, ist es bekannt, den Durchfluß einer Flüssigkeit in magnetisch-induktiver Weise zu messen, wobei mittels eines Magnetfeldes in der Flüssigkeit eine Meßspannung induziert wird. Gleichzeitig wird unabhängig von der Flüssigkeit eine magnetfeldabhängige Vergleichs- oder Referenzspannung induziert. Die Meßspannung und die Referenzspannung werden zu einem durchflußabhängigen Nutzsignal verarbeitet, in dem die Amplitude der Meßspannung durch die Amplitude der Referenzspannung nach einer Phasenkorrektur dividiert wird, d.h. das Nutzsignal als Quotient gebildet wird.

Bei dem bekannten Verfahren kann es insbesondere bei sehr kleiner Referenzspannung zu einem fehlerhaften oder undefinierten Nutzsignal kommen, da in diesem Fall eine Division durch Null oder einen kleinen Wert durchgeführt wird.

Das Dokument "Patent Abstracts of Japan, Vol. 8, No. 211 (P-303) (1648) JP-A-59 094 014", zeigt ein Verfahren, bei dem eine Spannung zu einer Vergleichsspannung ins Verhältnis gesetzt wird. Die Vergleichsspannung wird überwacht, indem der aktuelle Wert der Vergleichsspannung mit dem vorhergehenden Wert der Vergleichsspannung verglichen wird. Es findet somit eine relative Überwachung der Vergleichsspannung auf eventuelle übermäßige Änderungen oder gar Sprünge statt. Eine Überwachung auf eine Division durch Null oder einen sehr kleinen Wert ist gemäß diesem Verfahren nicht möglich.

Der Erfindung liegt die Aufgabe zugrunde, ein gattungsgemäßes magnetisch-induktives Durchflußmeßverfahren zu schaffen, bei dem das Auftreten von fehlerhaften oder undefinierten Nutzsignalen zuverlässig verhindert ist.

Diese Aufgabe wird erfindungsgemäß durch die Merkmale im kennzeichnenden Teil des Anspruchs 1 gelöst, wonach das Nutzsignal U_{N} oder die beiden zu dividierenden Amplituden U_{M} bzw. U_{R} konstant gehalten werden, während der Betrag der den Divisor bildenden Referenzspannung U_{R} einen nahe Null liegenden Mindestwert U_{V} unterschreitet, um ein undefiniertes Nutzsignal U_{N} zu verhindern.

Erfindungsgemäß wird die Referenzspannung U_{R}, die bei der Division den Divisor bildet, mit einem kleinen, nahe Null liegenden Mindestwert U_{V} verglichen. Wenn der Mindestwert U_{V} von der Referenzspannung U_{R} unterschritten wird, wird keine Division durchgeführt, sondern das Nutzsignal U_{N} wird konstant gehalten. Dies kann entweder dadurch erfolgen, daß die beiden zu dividierenden Amplituden konstant gehalten werden, was zu einem konstanten Nutzsignal führt, alternativ ist es jedoch auch möglich, das Nutzsignal direkt konstant zu halten. Somit ist es möglich, eine Division durch Null bzw. sehr kleine Werte und daraus resultierende fehlerhafte oder undefinierte Nutzsignale zuverlässig auszuschließen.

Die Phasenkorrektur ist notwendig, um eine grundsätzlich vorhandene Phasenverschiebung von 90° zwischen der Referenz- und der Meßspannung auszugleichen, so daß durch die nachfolgende Division ein korrektes Verhältnis der beiden Spannungen gebildet werden kann. Die Division der periodisch wechselnden oder pulsierenden Spannungswerte macht Bauelemente zur Glättung überflüssig. So entfallen durch diese Bauelemente bedingte Verzögerungszeiten. Dies hat zur Folge, daß beispielsweise sofort nach Beginn der Förderung einer Flüssigkeit ein brauchbares, geschwindigkeitsabhängiges Nutzsignal zur Verfügung steht, ohne daß Einschwingvorgänge zu berücksichtigen sind. Durch die schnellere Signalverarbeitung verbessert sich die zeitliche Auflösung wesentlich.

Die sinusförmigen Signale verlaufen sehr steil im Bereich der Nulldurchgänge. So sind die zeitlichen Bereiche, in denen Unstetigkeiten bzw. Undefiniertheiten durch eine Division durch Null auftreten können, sehr kurz im Vergleich zur Periodendauer der Signale. Dieses günstige Zeitverhältnis hat zur Folge, daß auch bei kurzzeitigem Konstanthalten des Nutzsignals oder der Eingänge des Dividierers ein quasi stetiges Nutzsignal erhalten wird.

Vorzugsweise wird die Meßspannung U_{M} durch die Referenzspannung U_{R} dividiert, so daß sich ein zur Durchflußgeschwindigkeit direkt proportionales Nutzsignal ergibt, welches unabhängig von Netzspannungsschwankungen ist.

Wenn die Meßspannung U_{M} und die Referenzspannung U_{R} vor der Division gleichgerichtet werden, erfolgt die Quotientenbildung aus Halbwellen gleicher Vorzeichen.

Um eine eventuelle Strömungsumkehr einer Flüssigkeit im Meßrohr erkennen zu können, kann die Phasenverschiebung zwischen der Referenzspannung und der Meßspannung vor dem Gleichrichten zur Detektion der Durchflußrichtung ausgewertet werden.

Es kann vorgesehen sein, daß bei einer Änderung der Durchflußrichtung das Vorzeichen des Nutzsignals U_{N} beispielsweise durch einen nachgeschalteten Inverter in Abhängigkeit von der Phasenverschiebung zwischen der Referenzspannung U_{R} und der Meßspannung U_{M} gesteuert oder durch ein Vorzeichensignal gekennzeichnet wird.

In einer Verfahrensvariante wird die Meßspannung U_{M} in Abhängigkeit von der Referenzspannung U_{R} phasenselektiv gleichgerichtet. Dies wird in konstruktiver Ausgestaltung dadurch verwirklicht, daß Mittel zur Detektion der Phasenlage der Referenzspannung U_{R} und ein in Abhängigkeit von dieser Phasenlage gesteuerter phasenselektiver Gleichrichter zur Gleichrichtung der Meßspannung U_{M} vorgesehen sind. Dabei werden bestimmte Halbwellen der Maßspannung U_{M} invertiert, so daß entweder eine positive oder negative pulsierende Gleichspannung erhalten wird. Die Auswahl der Halbwellen erfolgt durch die Bezugnahme auf die phasenkorrigierte (integrierte) Referenzspannung mit der Folge, daß die durch eine Durchflußrichtungsänderung bedingte Phasenverschiebung von 180° der Meßspannung zur phasenkorrigierten Referenzspannung in einem Vorzeichenwechsel der Gleichspannung resultiert. So steht dann ein entweder positives oder negatives gleichgerichtetes Meßsignal einem gleichgerichteten Referenzsignal mit festgelegter Polarität gegenüber, und es ist nur eine Division in zwei Quadranten erforderlich. Das Vorzeichen eines so gebildeten Nutzsignals ist dann mit der Durchflußrichtung korreliert.

Eine schaltungstechnisch einfache Ausführung ergibt sich dadurch, daß das Magnetfeld mit Netzfrequenz erregt wird.

In einer weiteren Verfahrensvariante ist vorgesehen, daß die analogen Spannungen U_{M} und U_{R} digitalisiert und digital dividiert werden. Eine entsprechende konstruktive Ausgestaltung zeichnet sich dadurch aus, daß Analog/Digital-Wandler zur Digitalisierung der Spannungen und ein Digitaldividierer zur Division der digitalisierten Signale vorgesehen sind. Auch hierbei führt die Division der sinusförmigen Spannungen oder Halbwellen gleicher Polarität zu einer Verbesserung der zeitlichen Auflösung.

Nachfolgend wird die Erfindung anhand der Zeichnung dreier Schaltungen näher erläutert. Es zeigen:
- Figur 1:: eine erste Schaltung;
- Figur 2:: eine zweite Schaltung und
- Figur 3:: eine dritte Schaltung.

Die Schaltungen verarbeiten Wechselspannungen U_{R} und U_{M}, wobei U_{R} eine magnetfeldabhängige Referenzspannung und U_{M} eine durchflußabhängige Meßspannung darstellt. Dabei ist U_{R} proportional zur zeitlichen Ableitung des magnetischen Flusses durch eine Referenzspule und damit proportional zur zeitlichen Ableitung des erzeugten Magnetfeldes. U_{M} ist direkt proportional zum Magnetfeld und der Durchflußgeschwindigkeit. Beide Spannungen U_{R} und U_{M} werden über Verstärker 1 und gegebenenfalls folgende Filterstufen aufbereitet. Durch die Filterstufen werden beispielsweise transformatorische Spannungen von Elektrodenzuleitungen und elektrochemische Gleichspannungen ausgefiltert. Über einen Integrator 2 erfolgt eine Phasenkorrektur der prinzipiell bedingten Phasenverschiebung von Referenzspannung U_{R} zur Meßspannung U_{M} um 90° (unterschiedliche Abhängigkeit vom Magnetfeld). Es folgt ein Vergleich der Referenzspannung U_{R} mit einer Mindestspannung U_{V} in einem Komparator 3, welcher Sample/Hold-Verstärker 4 steuert. Die Sample/ Hold-Verstärker 4 sind mit den Spannungen U_{R} und U_{M} beaufschlagt und Eingängen eines Dividierers 5 vorgeschaltet. Die Eingänge des Dividierers 5 sind so belegt, daß der Dividierer 5 das Nutzsignal U_{N} als Quotient aus U_{M} durch U_{R} bildet.

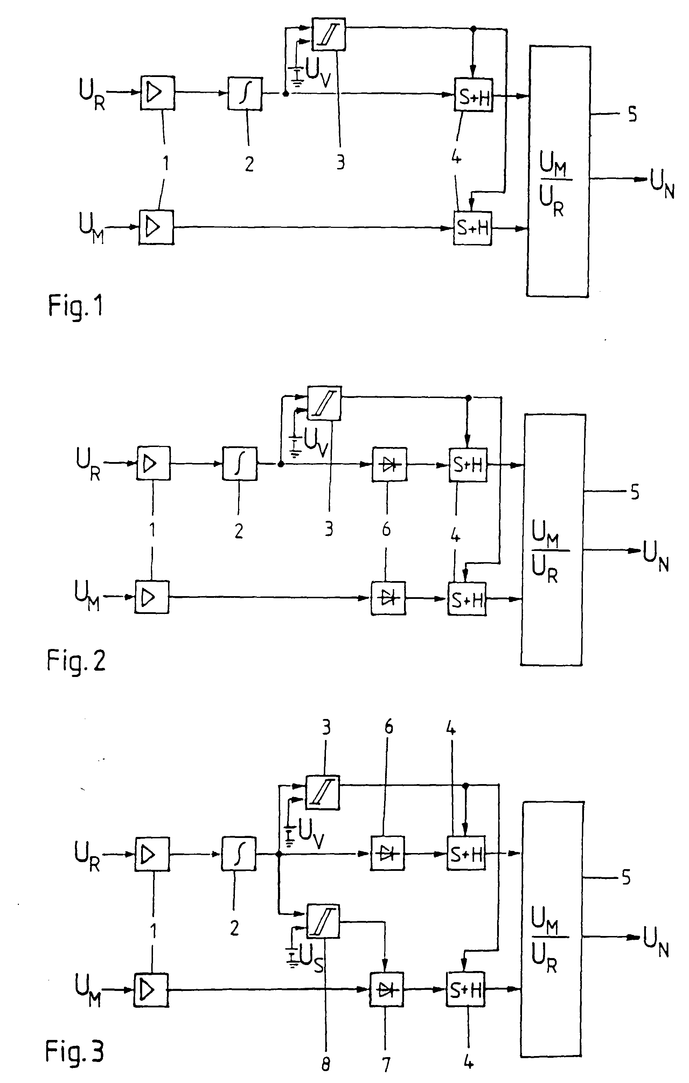

In der Schaltung nach Figur 1 werden die verstärkten und gefilterten Spannungen U_{R} und U_{M} nach der Phasenkorrektur von U_{R} direkt über die Sample/Hold-Verstärker 4 den Eingängen des Dividierers 5 zugeführt. Im Komparator 3 wird die Referenzspannung U_{R}, welche den Divisorwert im Dividierer 5 bildet, mit der Mindestspannung U_{V} verglichen, um beim Absinken des Betrages von U_{R} unter U_{V} die Sample/Hold-Verstärker 4 so zu steuern, daß die beiden an den Eingängen des Dividierers 5 anliegenden Amplitudenwerte konstant gehalten werden, bis die Referenzspannung U_{R} den durch die Mindestspannung U_{V} gebildeten Mindestwert wieder im Betrag übersteigt. Durch eine entsprechende Wahl der Mindestspannung U_{V} wird sichergestellt, daß nur definierte Zustände des Dividierers 5 durchlaufen werden und eine Division durch Null nicht erfolgen kann. Auf diese Weise wird ein quasi stetiger Verlauf des Nutzsignals U_{N}, welches das Ausgangssignal des Dividierers 5 bildet, erreicht. Der Dividierer 5 selbst arbeitet in dieser Schaltung als sogenannter 4-Quadranten-Dividierer, da seine beiden Eingänge ihre Vorzeichen ändern können. Der Dividierer 5 ist als analoge Schaltung ausgeführt und bildet ständig den Quotienten aus den eingangsseitig anliegenden Werten. Die Verzögerungszeit des Dividierers 5 ist im Vergleich zu Glättungsgliedern, wie sie sonst verwendet werden, vernachlässigbar, so daß bei sehr schnellen Änderungen der Durchflußgeschwindigkeit immer ein Nutzsignal U_{N} ohne zeitliche Verzögerung zur Verfügung steht.

In der Schaltung nach Figur 2 ist zusätzlich den Sample/ Hold-Verstärkern 4 jeweils ein Gleichrichter 6 vorgeschaltet. So werden die Referenzspannung U_{R} und die Meßspannung U_{M} dem Dividierer 5 nur mit festgelegter Polarität zugeführt. Bevorzugt weisen beide gleichgerichteten Spannungen U_{M} und U_{R} die gleiche Polarität auf, so daß der Dividierer 5 lediglich als sogenannter 1-Quadranten-Dividierer ausgeführt sein kann und entsprechend einfacher aufgebaut ist. Hierbei wird allerdings die Durchflußrichtung nicht erkannt.

In der Schaltung nach Figur 3 ist ein phasenselektiver Gleichrichter 7 für die Meßspannung U_{M} vorgesehen, welcher über einen Komparator 8 gesteuert ist. Der Komparator 8 vergleicht die Referenzspannung U_{R} mit einer Schaltspannung U_{S}, die der Nullpunktslage der Referenzspannung U_{R} entspricht, so daß der phasenselektive Gleichrichter 7 einzelne Halbwellen der Meßspannung U_{M} invertiert. In Abhängigkeit von der Durchflußrichtung, welche eine Phasenverschiebung um 180° bei der Meßspannung U_{M} bewirkt, wird eine positive oder negative Nutzspannung U_{N} erzeugt. Die Referenzspannung U_{R} selbst wird über einen Gleichrichter 6 und den Sample/Hold-Verstärker 4 einem Eingang des Dividierers 5 zugeführt, so daß an diesem Eingang immer eine Spannung gleicher Polarität anliegt. Zur Verarbeitung wird demzufolge ein 2-Quadranten-Dividierer benötigt, da der zur Referenzspannung U_{R} korrespondierende Eingangswert eine feste Polarität und lediglich der zur Meßspannung U_{M} korrespondierende Eingangswert eine wechselnde Polarität aufweisen kann. Damit wird im Gegensatz zu dem Ausführungsbeispiel nach Figur 2 auch die Durchflußrichtung erkannt.

In allen genannten Ausführungsbeispielen ist der Dividierer 5 als analoge Schaltung ausgeführt und bildet den Quotienten aus den anliegenden Amplitudenwerten, so daß eine schnelle Signalverarbeitung ermöglicht wird.

## Patentansprüche

1. Magnetisch-induktives Durchflußmeßverfahren für Flüssigkeiten unter Verwendung eines magnetischen Wechselfeldes, wobei eine magnetfeldabhängige Referenzspannung U_{R} und eine vom Magnetfeld in der Flüssigkeit induzierte Meßspannung U_{M} zu einem durchflußabhängigen Nutzsignal U_{N} verarbeitet werden, indem die Amplitude der mit Feldfrequenz zeitlich variierenden Meßspannung U_{M} durch die Amplitude der mit Feldfrequenz zeitlich variierenden Referenzspannung U_{R} nach einer Phasenkorrektur dividiert und damit das Nutzsignal U_{N} als Quotient gebildet wird, dadurch gekennzeichnet, daß das Nutzsignal U_{N} oder die beiden zu dividierenden Amplituden U_{M} bzw. U_{R} konstant gehalten werden, während der Betrag der den Divisor bildenden Referenzspannung U_{R} einen nahe Null liegenden Mindestwert U_{V} unterschreitet, um ein undefiniertes Nutzsignal U_{N} zu verhindern.

2. Verfahren nach Anspruch 1, dadurch gekennzeichnet, daß die Meßspannung U_{M} und die Referenzspannung U_{R} vor der Division gleichgerichtet werden.

3. Verfahren nach Anspruch 1 oder 2, dadurch gekennzeichnet, daß die Änderung der Phasenverschiebung zwischen der Referenzspannung U_{R} und der Meßspannung U_{M} vor dem Gleichrichten zur Detektion der Durchflußrichtung ausgewertet wird.

4. Verfahren nach einem der Ansprüche 1 bis 3, dadurch gekennzeichnet, daß bei einer Änderung der Durchflußrichtung das Nutzsignal U_{N} invertiert wird.

5. Verfahren nach einem der Ansprüche 1 bis 4, dadurch gekennzeichnet, daß eine Änderung der Durchflußrichtung durch ein Vorzeichensignal gekennzeichnet wird.

6. Verfahren nach einem der Ansprüche 1 bis 5, dadurch gekennzeichnet, daß die Meßspannung U_{M} in Abhängigkeit von der Referenzspannung U_{R} phasenselektiv gleichgerichtet wird.

7. Verfahren nach einem der Ansprüche 1 bis 6, dadurch gekennzeichnet, daß das Magnetfeld mit Netzfrequenz erregt wird.

8. Verfahren nach einem der Ansprüche 1 bis 7, dadurch gekennzeichnet, daß die analogen Spannungen U_{M} und U_{R} digitalisiert und digital dividiert werden.

## Claims

1. Magnetic-inductive flow measuring method for liquids using a magnetic alternating field, a magnetic field-dependent reference voltage U_{R} and a measurement voltage U_{M} induced by the magnetic field in the liquid being processed to a flow-dependent useful signal U_{N}, in that the amplitude of the measurement voltage U_{M} timed-varying with the field frequency is divided by the amplitude of the reference voltage U_{R} time-varying with the field frequency after a phase correction and therefore the useful signal U_{N} is formed as the quotient, characterized in that the useful signal U_{N} or the two amplitudes U_{M} or U_{R} to be divided are kept constant, whilst the amount of the divisor-forming reference voltage U_{R} drops below a minimum value U_{V} close to zero in order to prevent an undefined useful signal U_{N}.

2. Method according to claim 1, characterized in that the measurement voltage U_{M} and reference voltage U_{R} are rectified prior to division.

3. Method according to claim 1 or 2, characterized in that the change to the phase shift between the reference voltage U_{R} and measurement voltage U_{M} is evaluated for detecting the flow direction prior to rectification.

4. Method according to one of the claims 1 to 3, characterized in that the useful signal U_{N} is inverted when the flow direction changes.

5. Method according to one of the claims 1 to 4, characterized in that a flow direction change is indicated by a sign signal.

6. Method according to one of the claims 1 to 5, characterized in that the measurement voltage U_{M} is phase selectively rectified as a function of the reference voltage U_{R}.

7. Method according to one of the claims 1 to 6, characterized in that the magnetic field is excited with mains frequency.

8. Method according to one of the claims 1 to 7, characterized in that the analog voltages U_{M} and U_{R} are digitized and digitally divided.

## Revendications

1. Procédé de mesure électromagnétique de débit pour des liquides, utilisant un champ magnétique alternatif, dans lequel une tension de référence U_{R} dépendante du champ magnétique et une tension de mesure U_{M} induite par le champ magnétique dans le liquide sont transformées en un signal utile U_{N} en divisant, après une correction de phase, l'amplitude de la tension de mesure U_{M} variable dans le temps avec la fréquence du champ par l'amplitude de la tension de référence U_{R} variable dans le temps avec la fréquence du champ, le signal utile U_{N} devenant ainsi le quotient, caractérisé en ce que le signal utile U_{N} ou les deux amplitudes à diviser U_{M} et U_{R} sont maintenus constants, tandisque la valeur de la tension de référence U_{R} qui constitue le diviseur descend en-dessous d'une valeur minimale U_{V} proche de zéro, pour éviter un signal utile U_{N} indéterminé.

2. Procédé selon la revendication 1, caractérisé en ce que la tension de mesure U_{M} et la tension de référence U_{R} sont redressées avant la division.

3. Procédé selon l'une quelconque des revendications 1 ou 2, caractérisé en ce que la modification du déphasage entre la tension de référence U_{R} et la tension de mesure U_{M} est utilisée avant le redressement pour détecter le sens d'écoulement du débit.

4. Procédé selon l'une quelconque des revendications 1 à 3, caractérisé en ce que lorsque le sens d'écoulement du débit change, le signal utile U_{N} est inversé.

5. Procédé selon l'une quelconque des revendications 1 à 4, caractérisé en ce qu'un changement dans le sens d'écoulement du débit est caractérisé par un signal de polarité.

6. Procédé selon l'une quelconque des revendications 1 à 5, caractérisé en ce que la tension de mesure U_{M} est redressée par une sélection de phase en fonction de la tension de référence U_{R}.

7. Procédé selon l'une quelconque des revendications 1 à 6, caractérisé en ce que la fréquence d'excitation du champ magnétique est celle du réseau.

8. Procédé selon l'une quelconque des revendications 1 à 7, caractérisé en ce que les tensions analogues U_{M} et U_{R} sont numérisées et divisées numériquement.
